# EUROPEAN PATENT APPLICATION

(11) **EP 1 630 804 A1**
(43) Date of publication of application: **01.03.2006**
(21) Application number: 04725522.9
(22) Date of filing: 02.04.2004
(51) Int. Cl.: G11B 7/26, G11B 7/24, G11B 23/40

(54) **INK JET-USE RECEPTIVE LAYER FORMING METHOD AND DEVICE, AND DISK FORMED WITH INK JET-USE RECEPTIVE LAYER**

(30) Priority: 30.05.2003 JP 2003155599
(71) Applicant: DAINIPPON INK AND CHEMICALS, INC., Itabashi-ku, Tokyo 174-8520 (JP); Asahi Glass Co., Ltd., Tokyo 100-8405 (JP)
(72) Inventor: EBISAWA, Shouei, Konosu-shi, Saitama 365-0075 (JP); MATSUMOTO, Masaaki, Okegawa-shi, Saitama 363-0021 (JP); TSUNEMATSU, Norio, Ageo-shi, Saitama 362-0015 (JP); FUJII, Hiroyuki c/o Asahi Glass Co., Ltd., Ichihara-shi, Chiba 290-8566 (JP); YOKOTA, Nobuyuki c/o Asahi Glass Co., Ltd., Ichihara-shi, Chiba 290-8566 (JP)
(74) Representative: Banzer, Hans-Jörg
(86) International application number: PCT/JP2004/004838
(87) International publication number: WO 2004/107333

(57) **Abstract**

Concave grooves 6a and 6b for forming a receiving layer 5 for inkjet printing are provided at the inner peripheral and outer peripheral boundary portions of an application region on a disk substrate 4. The concave grooves 6a and 6b are formed with a substantially V-shaped cross section, and with a depth d that is at least equal to the film thickness of the coating film within a central region 6c between the concave grooves. A plurality of nozzles 27a through 27h of a supply device 25 is arrayed in a radial direction across the central region between the concave grooves 6a and 6b, and a substantially constant quantity of coating liquid per unit of surface area is applied so as to form a coating film of a predetermined thickness. The applied coating liquid portions are flattened by a mutual leveling effect. During drying, the coating film inside the concave grooves 6a and 6b does not dry first, but rather dries and contracts at substantially the same time as the coating film within the central region 6c, meaning a receiving layer 5 of uniform film thickness can be formed over the entire central region.

## Description

### TECHNICAL FIELD

The present invention relates to a process and apparatus for forming a receiving layer for receiving ink supplied by an inkjet printer (hereafter referred to as an inkjet receiving layer), and also relates to a disk with an inkjet receiving layer formed thereon. More specifically, the present invention relates to a process and apparatus for forming a coating film that functions as an inkjet receiving layer on the surface of a flat disk, by applying a coating liquid, which contains water or an alcohol as the solvent, to the surface of the disk to form the coating film, and then drying the liquid, and also relates to a disk with this type of inkjet receiving layer formed thereon.

Priority is claimed on Japanese Patent Application No. 2003-155599, filed May 30, 2003, the content of which is incorporated herein by reference.

### BACKGROUND ART

Conventional optical disks include CDs and DVDs, and these optical disks have a structure wherein an information recording layer is formed on one surface of a polycarbonate disk substrate, with a protective layer then formed on top. An annular-shaped label is then attached to the disk, either onto the protective layer the opposite surface to the information recording layer in the case of a CD, or directly onto the disk substrate on the opposite surface to the information recording layer in the case of a DVD, and this label is printed with all manner of information such as photographs, pictures, and titles relating to the CD or DVD.

In the case of conventional labels, either paper labels which have had information recorded thereon by offset printing or the like are affixed to the top of the protective layer, or offset printing or screen printing is used to print directly onto an annular label on the disk. These processes for forming labels have been employed with mass-produced disks such as CDs and DVDs, either by affixing paper labels that have been produced by offset printing in large quantities, or by offset printing or screen printing directly onto the disks.

However in recent years, the demand for high-variety, low-volume production, requiring the production of several hundred or several thousand units, has grown significantly in case of a optical disk such as CD or like. The use of the type of offset printing processes described above for printing the labels on this type of low-volume CD run is extremely expensive, due to the costs associated with preparatory processes such as editing, plate preparation, and color matching and the like, which are necessary for the type of offset printing, and is consequently unsuitable. In the case of this type of low-volume optical disk, on-demand printing or digital printing is typically used, wherein a digital image that has been prepared on a personal computer or the like is not subjected to editing, plate preparation, and color matching and the like, but is rather printed directly onto a receiving layer on the surface of the optical disk using inkjet printing or the like.

In the case of on-demand printing or digital printing, because the quality of the inkjet printed images varies considerably depending on the performance quality of the receiving layer, much research is being conducted into developing inkjet receiving layers for optical disks that will allow the printing of photographic images.

For example, in a recordable disk with a receiving layer formed thereon disclosed in Japanese Unexamined Patent Application, First Publication No. Hei 9-245380, the receiving layer is formed by applying a coating ink comprising a UV curable monomer or UV curable oligomer, and a polyvinyl alcohol that is a water-soluble hydrophilic resin to the surface of the optical disk, and then curing the coating ink with UV radiation.

Alternatively, in a receiving layer for recording sheets disclosed in Japanese Unexamined Patent Application, First Publication No. Hei 2-276670 and Japanese Unexamined Patent Application, First Publication No. Hei 6-270530, an inorganic porous ink receiving layer that is formed by applying a coating liquid containing silica or alumina sol or the like is employed as the recording sheet receiving layer. For example, if a water-based coating liquid comprising a pigment and a binder as the primary components (hereafter simply referred to as a water-based coating liquid) is applied to a application target and used to form a porous ink receiving layer, then it is known that inkjet printing onto this ink receiving layer using an inkjet printer is capable of producing photographic images.

This type of water-based coating liquid containing alumina sol or the like has a low solid content and low viscosity, and is used for producing a porous ink receiving layer by applying much the coating liquid to the surface of a non-solvent absorbent sheet to form thick coating using an application device such as a curtain coater, a wire bar coater or a reverse coater, and then drying the applied coating by either natural drying or hot air drying.

However, in the case of Japanese Unexamined Patent Application, First Publication No. Hei 9-245380, the ink receiving capability of the receiving layer formed from the UV curable resin is unsatisfactory, and the bleeding is prone to arise during printing with an inkjet printer or the like. As a result, the resolution of the printed image on the receiving layer is poor, meaning that particularly in those cases where a photograph or the like is printed, a clear image cannot be obtained.

In contrast, the porous ink receiving layers disclosed in Japanese Unexamined Patent Application, First Publication No. Hei 2-276670 and Japanese Unexamined Patent Application, First Publication No. Hei 6-270530 display far better ink receiving capability, making it possible to generate photographic images. However, although the water-based coating liquids used for forming the porous ink receiving layers disclosed in Japanese Unexamined Patent Application, First Publication No. Hei 2-276670 and Japanese Unexamined Patent Application, First Publication No. Hei 6-270530 can be applied to form a receiving layer using the various application devices listed above if the application target is in a raw fabric or sheet form, these application devices are unsuited to forming a uniform coating across an annular-shaped application area, such as that found on the surface of an optical disk.

In addition, because the solid content in the coating liquid is approximately 20% at the time of application, the viscosity is overly low, meaning it is very difficult to achieve a smooth application of the coating on a disk surface using the type of screen printing and spin coating methods that have conventionally been used for printing on optical disk or the like.

Other application methods capable of forming a coating on a disk surface include a method disclosed in Japanese Unexamined Patent Application, First Publication No. Hei 9-192574, wherein an inkjet head that moves relative to the disk is used, and a coating liquid is applied to the surface of the disk to form a coating film, with the rotation of the disk being used to ensure leveling of the film. However, because this method uses a single nozzle for the application, the associated productivity is poor, and because the application takes a considerable length of time, the coating liquid is prone to a loss of flowability, which makes leveling difficult to achieve. If an attempt is made to shorten the application time, then the rotational speed of the disk must be raised, but this causes the coating liquid to move due to the increased centrifugal force, causing a deterioration in the uniformity of the film thickness.

Another application method is described in Japanese Unexamined Patent Application, First Publication No. 2003-245591, which discloses a method wherein a plurality of nozzles arranged in a straight line are moved in a straight line and used to supply a photoresist liquid to the surface of a silicon wafer, thus forming a treatment film. However, with a method such as this, where a set of aligned nozzles are simply moved in a straight line and used to apply equal quantities of an application liquid, the formation of a uniform coating on an annular-shaped application target is essentially impossible, even if the supply rate of the application liquid is controlled, and an efficient application cannot be achieved.

In addition, Japanese Unexamined Patent Application, First Publication No. 2001-179162 discloses a method of forming a uniform coating on the surface of a disk by supplying a coating liquid to the annular-shaped application region on the disk using nozzles that are aligned along the radial direction of the application region, and then rotating the disk at high speed. However, the method disclosed in this application is based on the premise of spin coating, and is unable to improve the shortcoming of conventional spin coating methods, namely, the fact that the limitation for applicable viscosity of the coating film exists, and that the thickness of the final coating film have gradient across the radius of the disk.

Moreover, in each of the application methods described above, even assuming a coating liquid of uniform thickness is able to be applied to the surface of the disk, the problem described below can still not be resolved.

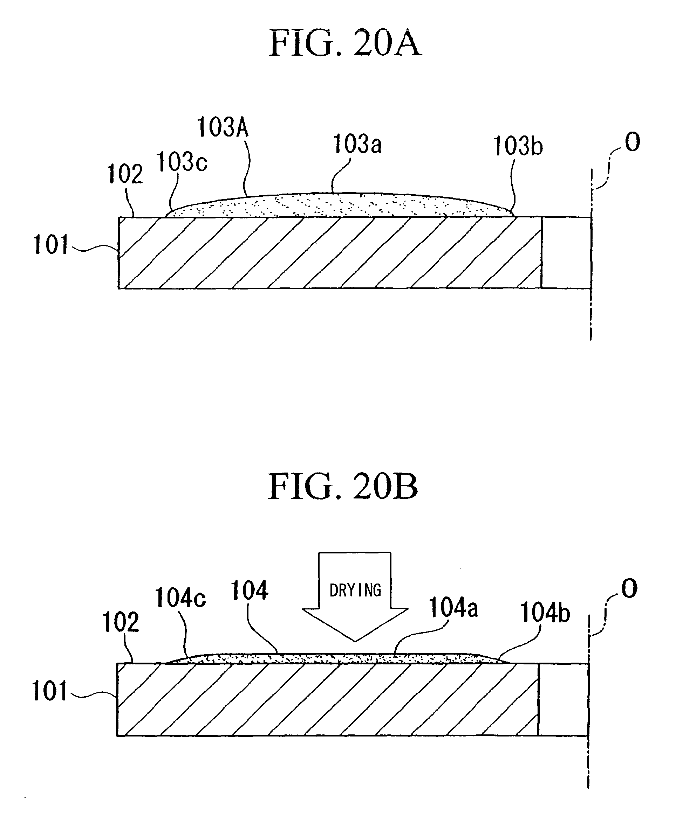

For example, as shown in FIG. 20A, if a water-based coating liquid is applied to the hydrophobic surface 102 of an optical disk substrate 101 in a substantially ring-shaped pattern when viewed from above, then at the inner peripheral region 103b and the outer peripheral region 103c, positioned at both the radial edges of the coating 103A relative to the central region 103a, the coating liquid adopts a substantially circular arc-shaped form as a result of surface tension, with the coating thickness gradually thinning until contact with the surface 102 occurs. This tendency is particularly marked with low viscosity coating liquids with favorable leveling properties. Moreover, when the coating film 103A is dried, the drying of the inner peripheral region 103b and the outer peripheral region 103c proceeds more quickly than that of the central region 103a. In such cases, the drying and hardening of the surface portions of the two peripheral regions 103b and 103c, where the coating liquid is exposed to the outside air, proceeds more quickly than the internal portions. Consequently, as the surface portions of these peripheral regions 103b and 103c contract on drying, a phenomenon occurs wherein the low viscosity coating liquid sitting inside the dried surface portions flows towards the central region 103a under the effect of surface tension, causing a further reduction in the film thickness of the two peripheral regions 103b and 103c.

As a result, as shown in FIG. 20B, the receiving layer 104 formed on drying and hardening of the coating liquid displays a film thickness of the inner peripheral region 104b and the outer peripheral region 104c formed at the radial edges of the layer, which is reduced from that of the central region 104a, and the film thickness gradually increases in a gentle slope from the inner peripheral region 104b and the outer peripheral region 104c towards the central region 104a, meaning a uniform film thickness cannot be achieved.

In such cases, because the film thickness is reduced within the inner peripheral region 104b and the outer peripheral region 104c of the receiving layer 104, the ink receiving capability of these regions diminishes, meaning they are prone to be supplied with too much ink for the ink receiving capability during printing, which can cause the ink to bleed and make it difficult to achieve a clear printed image.

The present invention takes the above circumstances into consideration, with an object of providing a process and apparatus for forming an inkjet receiving layer with a more uniform film thickness and a flatter surface shape, which is capable of forming a receiving layer with excellent ink receiving capability, as well as providing a disk with such a receiving layer formed thereon.

### DISCLOSURE OF INVENTION

A process for forming an inkjet receiving layer according to a first aspect of the present invention is a process for forming a inkjet receiving layer by using a plurality of arrayed nozzles to apply a coating liquid to an application region on the surface of a disk, thus forming a coating film, and subsequently drying the coating film, comprising the steps of forming partitions for partitioning the coating liquid at the boundaries between the application region and the non-application region, using each of the plurality of nozzles to supply a substantially constant quantity of coating liquid per unit of surface area to each of the supply positions within the application region that has been partitioned off by the partitions, and then flattening adjacent coating liquid portions by leveling, thus forming a receiving layer of constant film thickness across the entire application region.

Furthermore, an apparatus for forming an inkjet receiving layer according to another aspect of the present invention comprises a partition forming device, which forms partitions at the boundaries between the application region and the non-application region, and a supply device, which uses a plurality of nozzles to supply only the substantially constant quantity of coating liquid per unit of surface area required for forming a coating film with a predetermined film thickness in the application region that has been partitioned off by the partitions, wherein by supplying the coating liquid to the application region from each of the nozzles of the supply device, adjacent coating liquid portions are flattened by leveling, thus forming a receiving layer of constant film thickness across the entire application region.

According to this above aspect of the present invention, the coating film applied within the application region that has been partitioned off by the partitions is formed flat, and with a uniform film thickness, right up to the boundaries formed by the partitions, and leakage of the coating liquid outside the application region can be prevented. Because the partitions ensure that the coating liquid adequately reaches the boundaries of the application region, the phenomenon wherein the drying of the boundary portions of the coating film proceeds more quickly than that of the central region can be suppressed, and the problem caused by the coating liquid from the boundary portions moving during drying and causing variation in the film thickness can be effectively prevented.

Moreover, during application of the coating liquid, because the coating liquid supplied by the plurality of nozzles is applied equally so that only the quantity of coating liquid required to form a coating film of a predetermined film thickness is applied to the application region specified by the partitions, the coating liquid supplied by each nozzle is flattened by a mutual leveling effect, thus enabling formation of a coating film of uniform film thickness. Because the present invention does not require rotational spreading of the coating liquid, even low viscosity coating liquids can be used to efficiently form a uniform coating film, with no wastage of the coating liquid caused by external splatter to the outside.

In addition, because a coating liquid in liquid form is applied simultaneously from the plurality of nozzles, formation of the coating film can be completed in a far shorter time than that required when application is conducted using a single nozzle, and the problem that arises when those portions of the coating film that were applied first start to dry naturally, either during the application step or during the drying step, potentially causing wrinkling or cracking of the film, can be prevented.

In the present invention, concave grooves are preferably used as the partitions, with the coating liquid applied into the region enclosed by these concave grooves, and coating liquid that is supplied into the concave grooves suppresses preferential drying of the boundary portions of the coating film, and suppresses flow of the coating liquid during the drying step. Accordingly, the maximum depth of the concave grooves is preferably set to a value at least as large as the film thickness of the coating film formed within the application region enclosed by the concave grooves, thereby ensuring an adequate quantity of the coating liquid exists at the boundary portions. At the very least, the film thickness of the coating film at the concave grooves, namely, the maximum value of the depth of the coating liquid within the concave groove, from the surface of the coating film to the bottom of the groove, may be at least as large as the film thickness of the coating film formed within the application region enclosed by the concave grooves. Alternatively, the partitions may also be formed as convex portions, and portions formed by applying an ultraviolet light-curable composition in a convex shape, and then curing the composition by irradiation with ultraviolet light are preferred. The application region for the coating liquid, which represents the receiving layer formation region, can be clearly defined by either the concave grooves or the convex portions.

In order to ensure that the coating liquid is applied to the receiving layer formation region at a substantially constant quantity per unit of surface area, the plurality of nozzles is preferably aligned along the radial direction of the disk, with the coating liquid applied to the application region by relative rotation of the plurality of nozzles and the disk. In such cases, the peripheral velocity of the outer nozzles is larger than the inner nozzles, and so the quantity of coating liquid supplied per unit of time is preferably set so as to increase with increasing distance along the radial direction. In order to achieve this variation, the supply pressure may be adjusted at each of the nozzles, although maintaining the supply pressure at a constant value, and simply increasing the surface area of the nozzle supply port with increasing distance along the radial direction is preferred. Accordingly, the coating liquid supplied from the plurality of nozzles is preferably held under a stabilized pressure within a supply tank, and supplied to all of the nozzles from the same supply source. This enables fluctuations in the supply volume to be suppressed to extremely low levels, and ensures a constant pressure for the coating liquid. In those cases where the plurality of nozzles is fixed, and the disk is rotated on a central axis while the application is conducted, the disk should preferably be rotated at a speed that is sufficiently slow to prevent the coating liquid from flowing due to centrifugal force. Because leveling of the coating liquid does not occur by the effect of centrifugal force, the problem encountered when spin coater is used, where the coating liquid builds up at the outer peripheral portions of the disk, causing non-uniformity in the film thickness, does not occur.

The supply quantity per unit of time during supply of the coating liquid from the plurality of nozzles can be set by adjusting the application pressure and the nozzle diameters, although even with the same nozzle diameters, the supply quantity can also be adjusted by altering the installation density of the nozzles. In addition, some adjustment of the overall quantity of coating liquid applied can also be made by varying the relative speed of movement between the nozzles and the disk.

The coating quantity per unit of surface area can be set more accurately for smaller diameter nozzles, but if the nozzle diameters are too narrow, then the application efficiency tends to deteriorate. Consequently, the nozzle diameter must be set within an optimal range, in accordance with the viscosity of the coating liquid and the supply pressure applied to the coating liquid.

There are no particular restrictions on the number of nozzles employed, provided that for the nozzle diameter settings and the coating liquid supply quantity settings made in accordance with the required film thickness, coating liquid portions supplied from adjacent nozzles undergo mutual leveling almost immediately after application, although arraying the plurality of nozzles in the entire width across a substantially radial direction of the annular-shaped application region, with adjacent nozzles physically contacting one another, facilitates liquid mixing following application of the coating liquid, thereby improving leveling.

For example, in the case where a receiving layer with a dried film thickness of 20 to 100 µm is formed from an applied coating film of thickness 100 to 500 µm, the nozzle diameter can be suitably selected from within a range from 0.5 to 5 mm.

In the coating film forming device, the nozzle array positioned across the entire width in a substantially radial direction may comprise only a single line of nozzles, although a separate line of another plurality of nozzles may be arrayed along another radial direction located at a certain angle of separation from the first line of nozzles, and the nozzle array may even comprise a plurality of nozzle lines that extend outward from the center of the disk in a radial fashion.

In another example of an application process using a plurality of nozzles, the plurality of nozzles may be arrayed across the entire application region, and application may be conducted without any relative rotation of the plurality of nozzles and the disk. In such a case, because the plurality of nozzles is arranged, for example, in a honeycomb type configuration, the coating liquid can be supplied from each of the nozzles with the nozzles and the surface of the application target facing each other in a stationary state, and following leveling, a coating film of uniform film thickness can be formed, and because neither the nozzles nor the application target need to be moved, a receiving layer of good precision can be formed easily, and within a short period of time.

As the partition forming device, either a cutting device that forms concave grooves or a convex portion forming device that forms convex portions at the boundary portions of the application region can be used. Alternatively, partitions comprising either concave grooves or convex portions may be formed as an integral part of the disk, during manufacture of the disk.

A disk produced using a process or apparatus according to the present invention comprises partitions such as concave grooves formed at the boundary portions of the application region, and a receiving layer formed within the region that has been partitioned off by these partitions.

A production process of the present invention can be widely used for low viscosity coating liquids, and is ideal for forming uniform coating films using low viscosity coating liquids, which although displaying favorable leveling characteristics are unsuited to printing using screen printing techniques. The viscosity of the coating liquid should be set with due consideration given to ensuring a stable supply of the coating liquid from the nozzles, and ensuring favorable leveling, although the viscosity value is preferably within a range from 10 to 600 mPa·s, and even more preferably from 20 to 100 mPa·s, and most preferably from 25 to 75 mPa·s. Furthermore, the leveling properties of the coating liquid may be further improved by the addition of additives such as silicon or the like.

A coating liquid used in the present invention preferably comprises a solid content of no more than 25% by mass, and coating liquids in which the solid content is approximately 20% by mass are even more desirable. Furthermore, formation of the image on the receiving layer preferably uses the same types of water-based inks that are in widespread use in current inkjet recording, and the coating liquid is preferably a water-based coating liquid.

Examples of suitable water-based coating liquids include water-based coating liquids comprising a pigment and a binder resin that are used for forming porous ink receiving layers, and water-based coating liquids comprising a hydrophilic polymer that are used for forming swelling type ink receiving layers. In this description, the term "hydrophilic polymer" refers to a high molecular organic material that contains a hydrophilic group within the molecular structure, which is either dissolved in water, in a self-emulsified state, or has been dispersed through the addition of an emulsifier. Water-soluble polymers can be used as the hydrophilic polymer.

There are no particular restrictions on the types of pigments, binder resins, hydrophilic resins, or water-soluble polymers used, and conventional inorganic pigments and organic pigments, and the binder resins, hydrophilic polymers, and water-soluble polymers that are used in conventional coatings can be widely applied. In those cases where the pigment is an inorganic pigment and the binder resin is a water-soluble resin, the effects of the present invention manifest extremely favorably. In a swelling type ink receiving layer, the receiving layer itself absorbs the ink, and either swells or dissolves, thereby adsorbing the ink within the receiving layer. In contrast in a porous ink receiving layer, the ink is accommodated within spaces that exist between the fine particles of pigment. In terms of ink receiving capability, porous ink receiving layers are preferred.

A porous ink receiving layer comprises mainly a pigment and a binder, and suitable pigments include not only alumina, but also silica, boehmite, synthetic fine particulate silica, synthetic fine particulate alumina silicate, gas phase synthetic silica, silica-alumina composite particles, zeolite, montmorillonite group minerals, beidellite group minerals, saponite group minerals, hectorite group minerals, stevensite group minerals, hydrotalcite group minerals, smectite group minerals, bentonite group minerals, calcium carbonate, magnesium carbonate, calcium sulfate, barium sulfate, titanium oxide, zinc oxide, zinc carbonate, aluminum silicate, calcium silicate, magnesium silicate, kaolin, talc, alumina hydrate, plastic pigments, urea resin pigments, cellulose particles and starch particles. Of these, silica, alumina, silica-alumina composite particles, boehmite, and gas phase synthetic silica are preferred, and of these, boehmite (Al₂O₃.nH₂O, n = 1 to 1.5) is ideal from the viewpoints of ink absorption and dye fixation.

The average pore radius of the porous ink receiving layer is preferably within a range from 3 to 25 nm, and most preferably from 5 to 15 nm, and the pore volume is preferably within a range from 0.3 to 2.0 cm³/g, and most preferably from 0.5 to 1.5 cm³/g.

When a dried coating film is formed from a coating liquid with a solid content of no more than 20%, boehmite in particular provides an efficient formation of a plurality of pores in the thickness direction of the film during the drying step. In addition, the viscosity of boehmite increases rapidly as the solid content of the coating liquid is increased, meaning the application must be conducted using a coating liquid with a sufficiently low solid content. Accordingly, the process for forming a receiving layer according to the present invention is ideal.

The binder resin may use water-soluble polymers, alcohol-soluble polymers or water-soluble resins such as a mixture of these polymers, and suitable examples include starch or modified starch, polyvinyl alcohol or modified products thereof, styrenebutadiene rubber latex, nitrile-butadiene rubber latex, hydroxy cellulose, hydroxymethyl cellulose, polyvinyl pyrrolidone, polyacrylic acid or polyacrylamide. Of these in examples of this description, because the present invention requires favorable ink absorption and water resistance, the use of polyvinyl alcohol or modified products thereof is preferred. The quantity of the binder resin is preferably within a range from 1 to 100 parts by mass per 100 parts by mass of the aforementioned pigment, and quantities from 3 to 50 parts by mass are even more desirable.

On the other hand, examples of the types of hydrophilic polymers or water-soluble polymers that can be used in forming a swelling type ink receiving layer include water-soluble synthetic polymers such as urethane resin or modified products thereof, completely or partially saponified polyvinyl alcohol, modified polyvinyl alcohol, ethylene vinyl alcohol, polyvinyl pyrrolidone, polyalkylene oxide, polyacrylamide, or derivatives of these polymers, as well as natural water-soluble polymers such as gelatin, modified gelatin, starch, modified starch, casein, soybean casein, modified soybean casein or modified products thereof, and derivatives of these natural polymers, as well as cellulose derivatives such as methyl cellulose, ethyl cellulose, carboxymethyl cellulose, hydroxyethyl cellulose, hydroxypropyl cellulose, hydroxypropyl methyl cellulose, and nitrocellulose. Of these, urethane resin or modified products thereof, polyvinyl alcohol or derivatives thereof, polyvinyl pyrrolidone or derivatives thereof, polyacrylamide, cellulose derivatives, and gelatin or derivatives thereof are preferred. These hydrophilic polymers and water-soluble polymers can be used either singularly, or in mixtures of two or more different polymers.

In this description, a modified urethane resin refers to a urethane resin that has been converted to an aqueous form, and describes either a polymer in which a hydrophilic group has been introduced into the principal chain within the urethane skeleton to make the polymer self-emulsifying, thus enabling stable dispersion within water, or a urethane resin water dispersion produced by dispersion with an external emulsifier. Amongst these modified urethane resins, self-emulsifying type resins produced from a polycarbonate-based polyol or polyester-based polyol and an aliphatic isocyanate are preferred.

In addition to the polymer described above, a swelling type ink receiving layer may also contain, where necessary, from 0.05 to 10% by mass of a pigment relative to the mass of the polymer. Examples of suitable pigments include the same pigments as those described for porous receiving layers.

Other additives can also be added to the ink receiving layer where necessary, and examples of such additives include hardeners, leveling agents, antifoaming agents, thickeners, fluorescent whitening agents, coloring dyes, and coloring pigments. In the case of porous receiving layers, the effect of hardeners is particularly significant in the receiving layer formation step, as any coating film defects such as cracks that develop as a result of distortions in the layer, which can be caused by volumetric shrinkage on evaporation of moisture in the drying step following application of the water-based coating liquid, can be suppressed by gelling at an early stage of drying step. In those cases where polyvinyl alcohol is used as the binder resin, boric acid or borate salts are very effective as hardeners.

In the present invention, the thickness of the ink receiving layer provided on the surface of the disk may be selected in accordance with factors such as the ink absorption, the strength of the coating layer, and the intended use for the layer, although typically, layers with a thickness of 2 to 80 µm are used. If the thickness of the coating is less than 2 µm, then the ink receiving layer is unable to function effectively as an ink receiving layer, whereas in contrast, if the thickness exceeds 80 µm, there is a danger of a deterioration in the transparency and strength of the layer, and an increased likelihood of cracks developing in the layer. Within the above thickness range, ink receiving layers with a thickness of 10 to 50 µm are even more preferred, and layers of 30 to 40 µm are the most desirable. The mass of the dried coating film is preferably within a range from 2 to 80 g/m², and even more preferably from 20 to 70 g/m², and most preferably from 30 to 50 g/m². The film thickness of the applied coating liquid is typically 4 to 8 times that of the dried film thickness, depending on the solid content concentration of the coating liquid, and the mass of the coating liquid is typically within a range from 10 to 400 g/m².

Following supply of the coating liquid to the entire application region and formation of a coating film, a leveling step for flattening the coating film by imparting vibration to the film may be introduced if desired. By including a step that uses this type of leveling device, flattening of the coating film can be conducted more easily, and with favorable results.

Drying of the coating film is preferably conducted using a heating device positioned underneath the disk, using a temperature gradient that falls gently from the inside edge towards the outside edge of the coating film. By using this type of drying operation, the phenomenon in which a film forms on the surface of the coating in the early stages of drying, and vapor from the inside of the coating film then bursts through this film, causing irregularities in the surface of the coating film, can be prevented, and because this process also allows better prevention of wrinkling or cracking of the coating film during drying, an inkjet receiving layer of superior flatness can be formed.

### BRIEF DESCRIPTION OF THE DRAWINGS

FIG. 1 is a plan view showing the essential components of an apparatus for forming a receiving layer according to an example of the present invention.
FIG. 2 is a diagram showing a cutting device used for forming concave grooves in a disk substrate.
FIG. 3 is a diagram showing concave groove application nozzles for supplying a water-based coating liquid into the concave grooves.
FIG. 4 is a perspective view showing a coating film forming device for applying a water-based coating liquid to a region between the concave grooves.
FIG. 5 is a diagram showing the supply ports of the nozzles from the supply device shown in FIG. 4.
FIG. 6 is a side view showing a vibration device for leveling a coating film formed on a disk.
FIG. 7A is a plan view of a plate heaters with the tray removed, and FIG. 7B is an explanatory diagram showing the plate heaters and associated heater controllers.
FIG. 8 is a diagram showing a disk press used for suppressing deformation of a disk positioned on top of a surface heater.
FIG. 9 is a flowchart showing the processing steps within a process for forming a receiving layer.
FIG. 10A is a diagram showing a water-based coating liquid applied in the form of droplets, and FIG. 10B is a diagram showing the state following leveling.
FIG. 11A through FIG. 11C are diagrams showing the receiving layer formation steps for a disk, wherein FIG. 11A is a partial longitudinal sectional view showing the disk prior to application of the coating liquid, FIG. 11B is a partial longitudinal sectional view showing the disk following application of the coating liquid, and FIG. 11C is a partial longitudinal sectional view showing the disk following drying treatment.
FIG. 12 is an enlarged sectional view of a disk according to an example of the present invention.
FIG. 13 is an enlarged sectional view of the concave groove shown in FIG. 12.
FIG. 14 is an enlarged sectional view showing a concave groove according to a first modified example.
FIG. 15 is an enlarged sectional view showing a concave groove according to a second modified example.
FIG. 16 is an enlarged sectional view showing a concave groove according to a third modified example.
FIG. 17A and FIG. 17B are diagrams showing a modified example of a partition forming device, wherein FIG. 17A shows an application step, and FIG. 17B shows an ultraviolet light irradiation step.
FIG. 18 is a diagram showing a modified example of the nozzle supply ports of a supply device.
FIG. 19 is a perspective diagram showing the essential components of another example of a supply device.
FIG. 20A and FIG. 20B are diagrams showing a conventional process for forming a disk receiving layer, wherein FIG. 20A is a partial longitudinal sectional view showing the disk following application of the coating liquid, and FIG. 20B is a partial longitudinal sectional view showing the disk following drying treatment.

### BEST MODE FOR CARRYING OUT THE INVENTION

As follows is a description of preferred examples of the present invention, with reference to the drawings. However, the present invention is in no way limited to the examples presented below, and for example, suitable combinations of individual elements of the various examples are also possible.

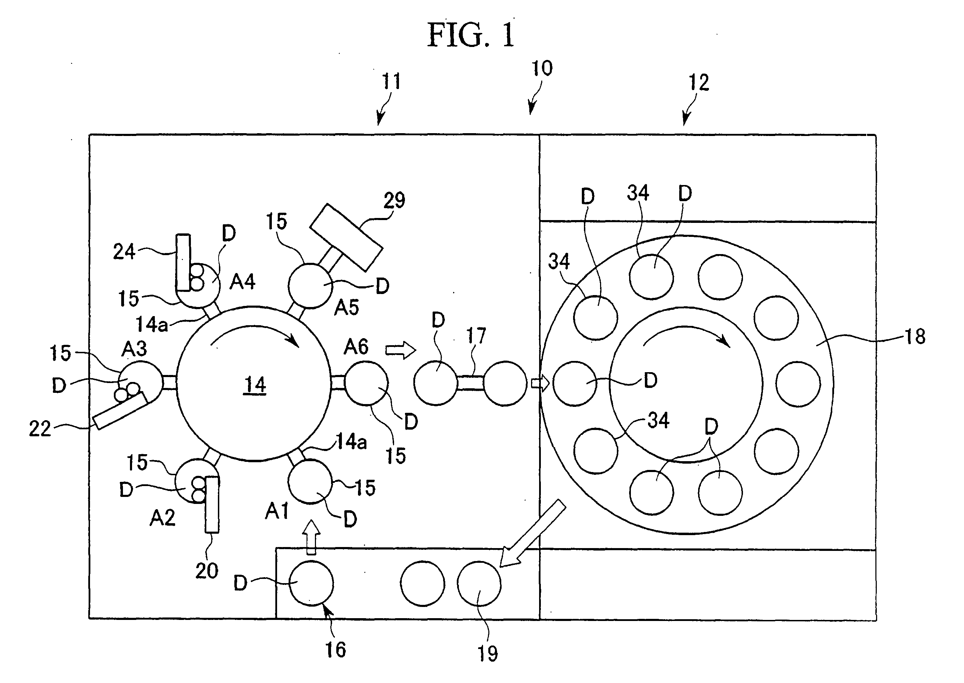

The examples of the present invention are described using the formation of a receiving layer on an optical disk as an example, with reference to FIG. 1 through FIG. 13.

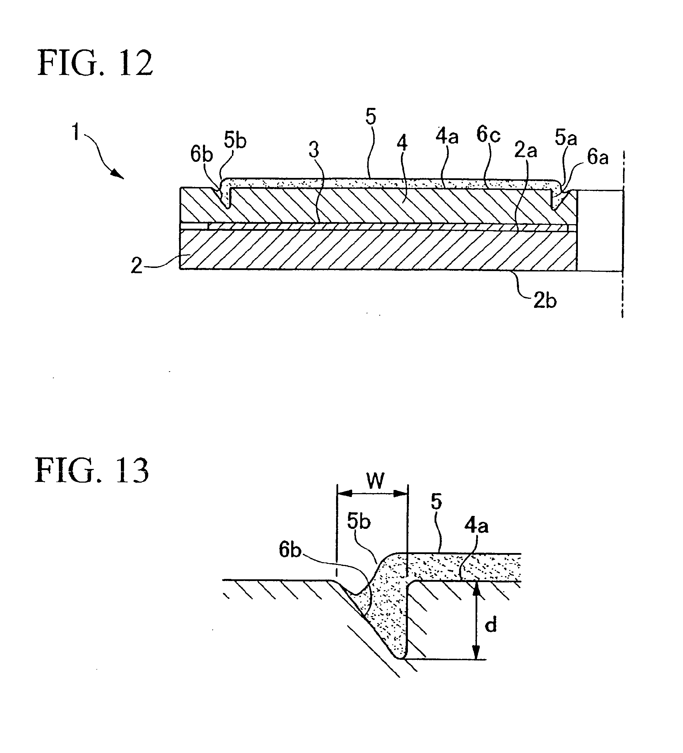

An optical disk 1, which functions as an optical information recording medium onto which a receiving layer is formed using an apparatus for forming a receiving layer according to the example of the present invention, is a typical digital video disk, for example. As shown in FIG. 12, this disk comprises a ring-shaped disk substrate 2 formed from a polycarbonate substrate (PC substrate) or the like, and an information recording layer 3 is formed on one surface 2a of this substrate. This information recording layer 3 comprises a surface with a series of irregularities of approximately 0.1 µm, formed using a stamper or the like, which has been coated with a reflective film formed from a thin metal film. Another disk substrate 4 is then bonded to the surface of this information recording layer 3 using an adhesive. A playback light beam is irradiated onto the disk through the other surface 2b of the disk substrate 2, and the reflected light beam from the information recording layer 3 is then read. An ink receiving layer 5, produced by applying a water-based coating liquid and then drying the coating film, is provided on a print surface 4a disposed on top of the disk substrate 4 positioned on the opposite side of the disk 1 to the information reading surface 2b. This ink receiving layer 5 is formed, for example, from a porous material, and functions as a thin layer for printing, which accommodates an ink supplied from an inkjet printer or the like in the pores of the porous material, enabling the display of a clear image or textual information. The print surface 4a of the disk substrate 4 is a hydrophobic surface. Concave grooves 6a and 6b are formed at an inner peripheral boundary portion and an outer peripheral boundary portion respectively of the print surface 4a, and the ink receiving layer 5 is formed within the annular-shaped print surface 4a partitioned off by these concave grooves 6a and 6b.

The water-based coating liquid S that functions as the coating liquid for forming the ink receiving layer 5 is an aqueous coating liquid responsible for forming the dried ink receiving layer 5, and in the examples of the present invention, descriptions are provided for both a water-based coating liquid for forming a porous ink receiving layer, which has a pigment and a binder resin, and a water-based coating liquid for forming a swelling type ink receiving layer, which has a hydrophilic polymer or a water-soluble polymer.

In FIG. 12, the concave grooves 6a and 6b formed in the print surface 4a of the disk substrate 4 have a substantially V-shaped cross section, as shown in the longitudinal sectional view of FIG. 13, wherein the inside edge of the V (on the side of the ink receiving layer 5) drops down vertically, and a sloped surface is then formed that rises up towards the outside edge of the V. The width W in a radial direction, and the depth d of the openings produced by the concave grooves 6a and 6b can be set in accordance with the desired film thickness and the viscosity of the coating liquid, although in the optical disk 1, the width W is preferably set to at least 300 µm, and preferably within a range from 300 to 400 µm, and the depth d is preferably set to a value of at least 150 µm. The present invention is, of course, not restricted to these ranges.

If the width W is less than 300 µm, then not only is the coating liquid unable to flow satisfactorily into the concave grooves during application, but also if air becomes entrapped within the concave grooves 6a and 6b, then it is unable to escape upwards, and becomes trapped inside, meaning that in the subsequent drying, there is a danger of this entrapped air expanding and bursting, leading to the formation of residual burst marks on the surface of the ink receiving layer 5. As a result, the width W is preferably of sufficient size to ensure that the coating liquid can flow satisfactorily into the concave grooves 6a and 6b, and any air bubbles entrapped inside the grooves are able to escape out. If the width W exceeds 400 µm, then there is a chance that the portions where the concave grooves are formed will become obviously visible, and consequently the width does preferably not exceed this value.

As described below, the coating liquid preferably comprises approximately 80% water and a 20% solid content, although the ratio is not restricted to these values. In order to ensure adequate ink reception, the film thickness of the ink receiving layer 5 following drying is preferably set to a value of at least 2 µm. For example, in the case where a dried film thickness of approximately 30 µm, which is sufficient to provide a satisfactory ink receiving capability, the coating liquid supplied to the application region need to be applied with a thickness of approximately 150 µm. The ink receiving layer 5 is then formed with a substantially uniform film thickness across the entire surface in the central region 6c enclosed by the concave grooves 6a and 6b, although at the inner peripheral boundary portion 5a and the outer peripheral boundary portion 5b, the height of the coating film decreases in moving across the concave grooves 6a and 6b in an inward or outward radial direction respectively, and in these regions, the coating film depth from the surface of the coating film to the bottom of the concave groove varies. During drying of the coating film formed from the coating liquid, in order to ensure that the coating film at the concave grooves 6a and 6b does not dry first, causing the coating liquid in these regions to flow towards the central region 6c, the depth d of these concave grooves may be at least approximately equal to the film thickness of the coating liquid supplied to the central region 6c, namely approximately 150 µm, although the depth d of the concave grooves 6a and 6b is preferably set so that the aforementioned coating film depth at least one portion within the concave grooves 6a and 6b is at equal to, or greater than, the film thickness at the central region 6c. In the concave grooves 6a and 6b shown in FIG. 12 and FIG. 13, the depth at the inside edge of the grooves represents the maximum depth d, and the coating film depth of the coating liquid at these portions is preferably equal to, or greater than, the film thickness at the central region 6c.

Accordingly, in an optical disk 1 of this example, if ink is applied to the ink receiving layer 5 using an inkjet printer or the like, then a clear printed image can be achieved across the entire application region. Particularly in the case of a porous ink receiving layer, the ink can be accommodated within the pores of the ink receiving layer 5, which is formed with a substantially uniform film thickness across the entire surface, and consequently no bleeding occurs from any of the pores, enabling a clear printed image to be obtained.

In the regions within the concave grooves 6a and 6b, the height of the ink receiving layer 5 falls in a curve in the radial direction, following the shape of the concave grooves, leading to a variation in the film thickness, and as a result, although these regions have favorable ink receiving capabilities and are not prone to bleeding, any printing within these portions can appear distorted. Accordingly, printing on the ink receiving layer 5 is preferably conducted only within the central region 6c enclosed by the concave grooves 6a and 6b.

Next is a description of an apparatus 10 for forming a receiving layer.

As shown in FIG. 1, the receiving layer formation apparatus 10 has at least a coating film forming section 11 and a drying section 12. In the coating film forming section 11, a plurality (6 for example) of arms 14a are provided at a predetermined spacing around the periphery of a substantially circular turntable 14, and a turntable 15, which functions as a disk transport device, is provided at the free end of each arm 14a. Each turntable 15 uses suction to hold a disk D used for fabricating an optical disk 1, is able to be freely rotated on a central axis O of the turntable 15, and revolves intermittently on the central axis of the turntable 14 as the turntable 14 is rotated. At the intermittent revolution stop positions for each turntable 15 are provided a handover portion A1, a partition forming portion A2, a preliminary application portion A3, a main application portion A4, a leveling portion A5, and an ejection portion A6 respectively.

In the handover portion A1, a disk D on which neither the ink receiving layer 5 nor the concave grooves 6a and 6b for the optical disk 1 have been formed is received from a supply portion 16. The steps performed at the partition forming portion A2 through to the leveling portion A5 are then used to form a coating film Sa, comprising a water-based coating liquid S for forming a porous ink receiving layer, on the print surface 4a, and the disk D is then transferred at the ejection portion A6, via a transfer portion 17, to the drying section 12. In the drying section 12, the disk revolves by a ring-shaped transport member 18 while the coating film is dried.

A stacking device for stacking a plurality of disks D with spacers provided therebetween, which is not shown in the drawings, is provided at the disk supply portion 16, and the spacer is removed from the stacking device and the top disk D is handed from the supply portion 16 to the turntable 15 at the handover portion A1.

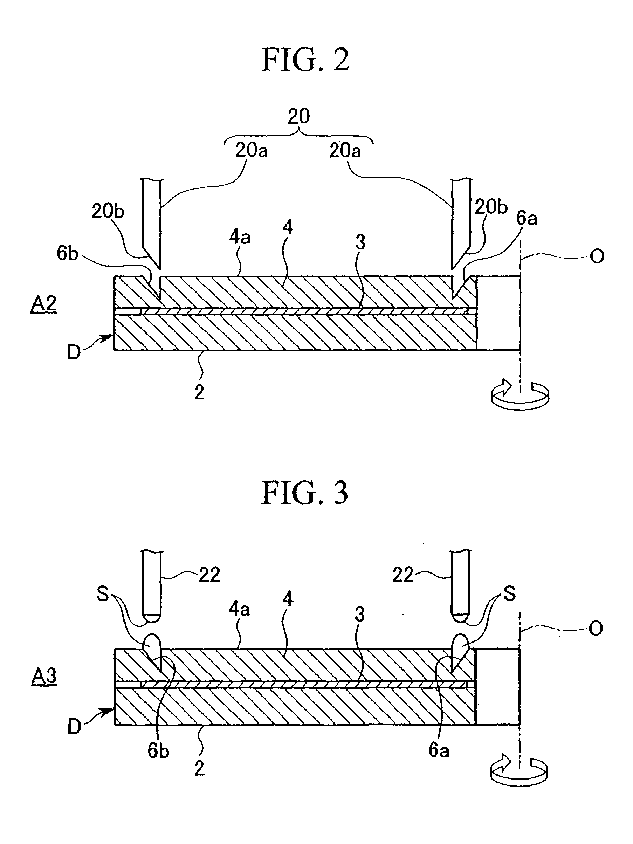

The following process from the partition forming portion A2 through to the leveling portion A5, and including the drying section 12, is described with reference to FIG. 2 through FIG. 8. In FIG. 2, a cutting device 20 is provided at the partition forming portion A2. This cutting device 20 comprises a pair of cutting blades 20a, and these cutting blades 20a produce cuts in the print surface 4a of the disk substrate 4 of the disk D, at positions corresponding with the inner peripheral edge and the outer peripheral edge of the annular-shaped application region in which the ink receiving layer 5 is to be formed, thus creating the concave grooves 6a and 6b respectively. Each cutting blade 20a has a cutting edge with a sloped outer edge 20b so that the side of the thus formed concave groove 6a or 6b that faces the receiving layer is vertical, and the opposite side is tapered. The disk D and the cutting device 20 are then subjected to relative rotation on the central axis O of the disk D, while each of the cutting blades 20a is used to cut the disk substrate 4, thus enabling the formation of two ring-shaped concave grooves 6a and 6b. Because the disk substrate 4 is formed from a polycarbonate resin, the disk substrate 4 is forced outward in both directions by the action of the cutting blades 20a, resulting in the formation of substantially V-shaped concave grooves, and scraping does not occur.

Subsequently, in the preliminary application portion A3 shown in FIG. 3, a pair of concave groove application nozzles 22 is positioned facing the two concave grooves 6a and 6b. The water-based coating liquid S is supplied from each of the concave groove application nozzles 22 as a coating liquid, and the concave grooves 6a and 6b are filled to the point where they protrude above the substrate. The disk D and the concave groove application nozzles 22 are subjected to relative rotation on the central axis O of the disk D, while the water-based coating liquid S is applied from each of the nozzles 22.

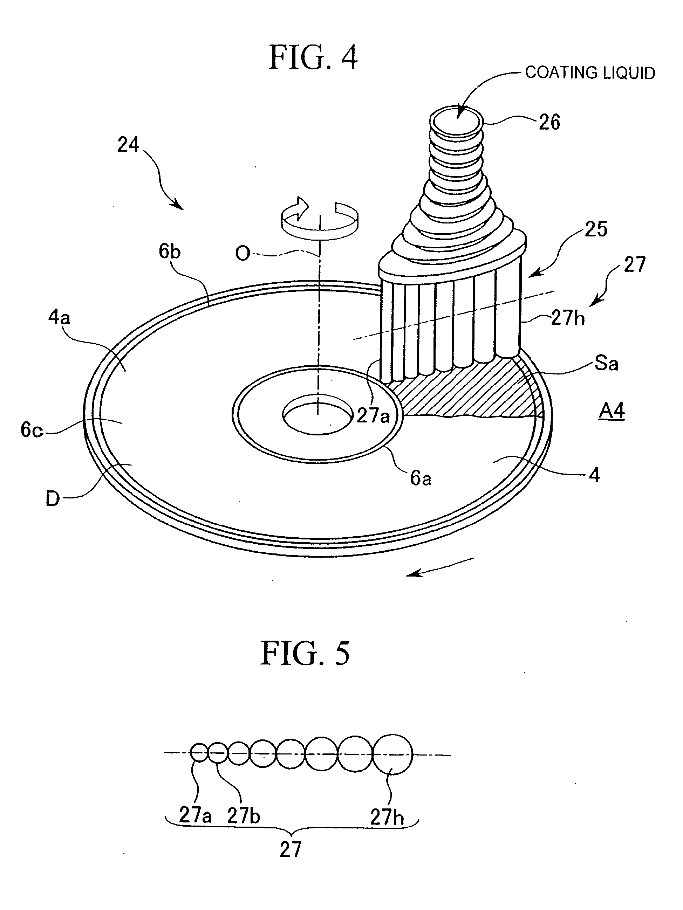

In FIG. 4, a coating film forming device 24 is provided in the main application portion A4. This coating film forming device 24 is a device for applying the water-based coating liquid S to the annular-shaped central region 6c of the print surface 4a that has been partitioned off by the concave grooves 6a and 6b. The water-based coating liquid S used by this device is the same as the water-based coating liquid S used by the concave groove application nozzles 22 described above, and examples of possible formulations for this coating liquid are described below. Receiving layer formulations 1 to 3 are formulations that relate to water-based coating liquids for porous ink receiving layers, whereas receiving layer formulations 4 and 5 are formulations that relate to water-based coating liquids for swelling type ink receiving layers. The present invention is not restricted to these formulations.

### Receiving layer formulation 1

### Alumina sol (solid content 20%): 100 parts by mass

### Polyvinyl alcohol (PVA-124, Kuraray Co., Ltd., solid content 7%): 28.6 parts by mass

### Boric acid (solid content 4%): 5 parts by mass

### (Production process for alumina sol)

A glass reaction vessel of capacity 2 liters was charged with 327 g of an aqueous solution of polyaluminum chloride (brand name Takibine #1500, manufactured by Taki Chemical Co., Ltd., Al₂O₃ equivalent aluminum concentration 23.5% by mass, Cl concentration 8.1% by mass, basicity 84%) and 1548 g of water, and the temperature was raised to 95°C. 125 g of a commercially available sodium aluminate solution (Al₂O₃: 20% by mass, Na₂O: 19% by mass) was then added, and with the liquid temperature maintained at 95°C, the reaction mixture was stirred and aged for 24 hours, thus yielding a slurry. The pH immediately after addition of the sodium aluminate solution was 8.7 at 95°C.

The aged slurry was washed using an ultrafiltration device, the temperature was once again raised to 95°C, and sufficient amidosulfuric acid was then added to account for 2% of the total solid content of the washed slurry. Following reduced pressure concentration of the slurry up to a total solid content of 21 %, the slurry was treated with ultrasound dispersion, yielding an alumina sol of pH 4.5 in which the average particle size of the agglomerated particles of boehmite crystals was 190 nm.

### Receiving layer formulation 2

### Silica-alumina composite sol (solid content 20%): 100 parts by mass

### Polyvinyl alcohol (PVA-140H, Kuraray Co., Ltd., solid content 7%): 57.2 parts by mass

### Boric acid (solid content 4%): 5 parts by mass

### (Production process for silica-alumina composite sol)

A glass reaction vessel of capacity 2 liters was charged with 554.8 g of sodium silicate solution (SiO₂ concentration 28.84%, Na₂O concentration 9.31%) and 1182.6 g of ion exchange water, and with the solution undergoing constant stirring, 330.0 g of a 5 mol/L aqueous solution of hydrochloric acid was added over a 4 hour period. Following completion of the addition, the pH of the reaction liquid was 6.4. Subsequently, the temperature was raised to 80°C, and the reaction mixture was stirred and aged for 4 hours, thus generating a silica hydrogel. The thus obtained silica hydrogel contained very large particles with particle diameters of several mm, so a colloidal mill was used to crush the particles down to an average particle size of no more than 30 µm.

The crushed silica hydrogel was placed in a glass reaction vessel of capacity 2 liters, and the temperature was raised to 80°C with constant stirring. Sufficient polyaluminum chloride solution (brand name Takibine #1500, manufactured by Taki Chemical Co., Ltd., Al₂O₃ equivalent aluminum concentration 23.5% by mass, Cl concentration 8.1 % by mass, this applies to all following references to polyaluminum chloride) to generate a mass ratio of the Al₂O₃ within the polyaluminum chloride relative to the mass of SiO₂ within the silica hydrogel of 100/15 was then added gradually over a about 10 minute period. Following completion of this addition, stirring was continued for a further 1 hour with the temperature maintained at 80°C, and the reaction mixture was then cooled to room temperature.

A 5 mol/L aqueous solution of sodium hydroxide was added to adjust the pH of the reaction liquid to 7, and an ultrafiltration device was then used to purify the reaction liquid until the conductivity of the filtrate fell below 50 µS/cm. Sufficient amidosulfuric acid was then added to account for 3% of the total solid content of the purified solution, the solution was then concentrated by heating under reduced pressure, and following cooling, a bead mill with beads made of Zirconia of diameter 0.5 mm was used to crush the product, yielding a silica-alumina composite sol with a concentration of 23%, pH of 5, a primary particle size of 16 nm, and an agglomerated particle size of 290 nm.

### Receiving layer formulation 3

### Silica dispersion (solid content 14%): 100 parts by mass

### Polyvinyl alcohol (PVA-420, Kuraray Co., Ltd., solid content 7%): 50 parts by mass

### (Production process for silica dispersion)

A mixed liquid of fine silica particles made by a vapor phase method (Aerosil 300, Nippon Aerosil Co., Ltd.) and water was subjected to dispersion treatment for 30 minutes at 10,000 rpm using a high speed rotating colloidal mill (Clear Mix, M Technique Co., Ltd.), thus yielding a silica dispersion.

### Receiving layer formulation 4

### Methyl cellulose (Metolose SM 15, Shin-Etsu Chemical Co., Ltd.): 100 parts by mass

### Amorphous silica (Sylysia 370, Fuji Silysia Chemical Ltd.): 0.03 parts by mass

The methyl cellulose was a solution with a solid content concentration of 3%, and by mixing and stirring the amorphous silica into this solution, a water-based coating liquid was obtained.

### Receiving layer formulation 5

### Modified urethane resin (brand name Patelacol IJ70, manufactured by Dainippon Ink and Chemicals, Incorporated): 100 parts by mass

A water-based coating liquid comprising the above commercially available modified urethane resin was used, as is.

The coating film forming device 24 comprises a supply device 25 for supplying the water-based coating liquid S across the radial direction of the turntable 15 as the turntable 15 is rotated about the central axis O. This supply device 25 has a single supply portion 26 (supply source), and a nozzle portion 27 having a plurality of nozzles 27a, 27b, through to 27h, which branch off the supply portion 26, and the discharge and halting of the supply of the water-based coating liquid S from the nozzles 27a through 27h is controlled by opening and closing a valve, which is not shown in the drawings, provided within the supply portion 26. Each of the nozzles 27a through 27h is formed from a microdispenser nozzle or the like, and the nozzles are arrayed across the radial direction of the disk D, for example in a straight line across the width of the ink receiving layer 5 formation region between the concave grooves 6a and 6b. Moreover, as shown in FIG. 5, each of the nozzles 27a through 27h comprises a circular supply port, and the innermost nozzle 27a positioned closest to the inner periphery of the disk has the supply port with the smallest surface area, and the surface area of the supply ports then gradually increases when moving outwards along the radial direction to the other nozzles 27b, 27c, and so on, with the outermost nozzle 27h having the supply port with the largest area.

As a result, the supply volume per unit of time gradually increases from the innermost nozzle 27a out to the outermost nozzle 27h, meaning the supply volume from each nozzle 27a through 27h per unit of surface area on the disk D is set at a constant value. This is because although the nozzles 27a through 27h aligned along the radial direction undergo rotation relative to the disk D at the same angular velocity, the peripheral velocity actually increases with increasing distance from the inner periphery. For example, if a series of nozzles in which the supply port diameter gradually increases from 1.5 to 2.5 mm are aligned in a straight line from the inner periphery to the outer periphery, with adjacent nozzles contacting one another, then the coating liquid can be supplied with a supply pressure of 0.4 to 0.5 kg/cm² from a common supply source.

Application of the water-based coating liquid S from each of the nozzles 27a through 27h forms an annular-shaped coating film Sa in the central region 6c between the concave grooves 6a and 6b.

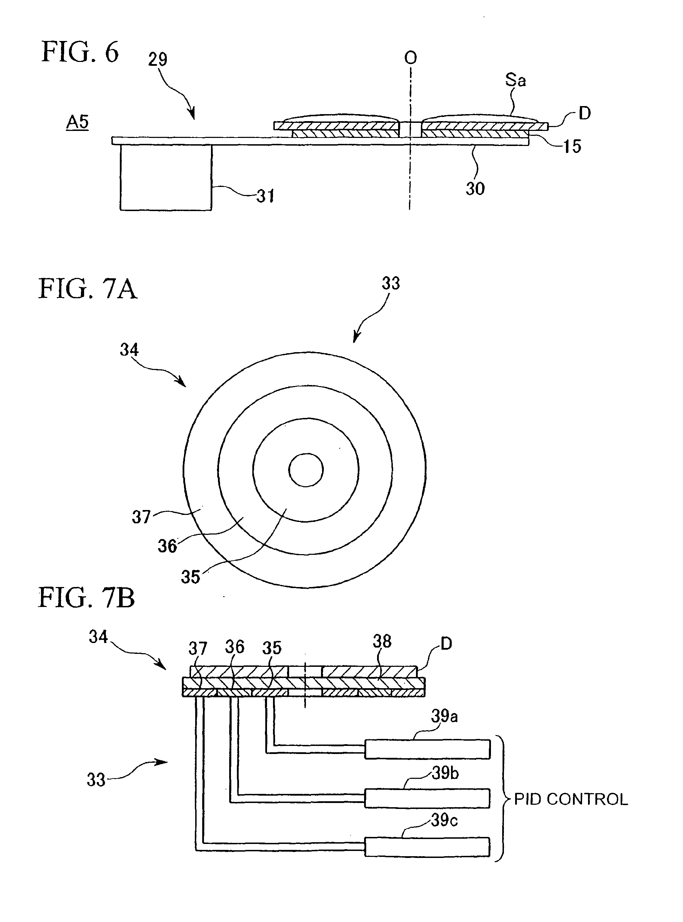

In the leveling portion A5 shown in FIG. 6, a vibration device 29 is provided.

In the vibration device 29, a turntable 15 that uses suction to hold the disk D, is supported, for example, on top of a plate-type support member 30. The support member 30 constitutes a metal ultrasound transmission device, and an ultrasound oscillator 31 comprising an ultrasound transducer or a piezoelectric element or the like is attached to the other end of the support member 30 in a position that is separated from the turntable 15. By activating this ultrasound oscillator 31, generated ultrasound vibrations are transmitted through the support member 30 and the turntable 15, and into the coating film Sa on top of the disk D, thus forcibly leveling the coating film.

For example, by using a PZT transducer as the ultrasound oscillator 31, with a 5 second longitudinal oscillation with a power of 80 W and a frequency of 28 to 45 kHz, and a 15 second rest period, the 5 second oscillation is repeated about 2 to 3 times. This causes the vibration of the disk D to follow the oscillation of the ultrasound oscillator 31, thus flattening the coating film.

By using this leveling function, the plurality of rows of the water-based coating liquid S from the nozzles 27a through 27h can be mutually flattened. Moreover, when the nozzle portion 27 undergoes a single entire revolution relative to the disk D and application is completed, then when supply of the streams of the water-based coating liquid S from each of the nozzles 27a through 27h is stopped, the start point and the end point of each row of liquid overlap, forming a region of greater irregularity than the ridge type irregularities formed between adjacent rows of coating liquid from each of the nozzles 27a through 27h. This region of greater irregularity can be flattened easily by the leveling effect of the vibration device 29.

As follows is a description of a drying device disposed within the drying section 12, based on FIG. 7A and FIG. 7B.

In the drying section 12 shown in FIG. 1, a disk D with an annular-shaped coating film Sa formed on the print surface 4a transfers with revolving around on a ring-shaped transport member 18 while the coating film is dried. In a drying device 33, a plurality of plate heaters 34 are arrayed around the transport member 18 at a predetermined spacing, and a disk D with a coating film Sa formed thereon is mounted substantially concentrically on each surface heater 34.

As shown in FIG. 7A, each surface heater 34 comprises a plurality (3 sheets in the example shown) of ring-shaped plate heaters of differing diameter which are fitted together in a concentric arrangement, and in order from the inside outwards, these heaters are labeled the first heater 35, the second heater 36 and the third heater 37 respectively. The heating temperature of each heater is set so that the temperature of the first heater 35 is the highest (for example, approximately 130°C), the temperature of the second heater 36 is next highest (for example, approximately 90°C), and the temperature of the third heater 37 is the lowest (for example, approximately 80°C), and heating is performed for approximately 3 minutes.

A metal circular plate shaped tray 38 with a large heat capacity (a large specific heat) is fitted to the upper surface of the first through third heaters 35 to 37, and the entire disk D closely contacts the top of the tray 38 (see FIG. 7B). By positioning the tray 38 between the first through third heaters 35 to 37 and the disk D, the temperature gradient in the radial direction that is transmitted to the disk D can be smoothed. If the tray 38 is not provided, then the variations in temperature cause the shapes of the heaters 35 to 37 to be thermally transferred to the coating film Sa on the disk. In a preferred example, the temperatures between the tray 38 and the disk D generated by the heating generated by the first, second, and third heaters 35, 36, and 37 are preferably approximately 95.7°C, 86.0°C, and 77.5°C respectively, so that the temperature difference is approximately 10 to 20°C. In order to enable favorable maintenance of the temperature gradient, the material of the tray 38 preferably has a small thermal conductivity (k), for example a thermal conductivity within a range from 2 to 20 W/m·K, and materials such as SUS and quartz glass are preferred.

In FIG. 7B, the first through third heaters 35 to 37 are each electrically connected to a heater controller 39a, 39b, and 39c respectively, and PID control is achieved using a control device not shown in the figure.

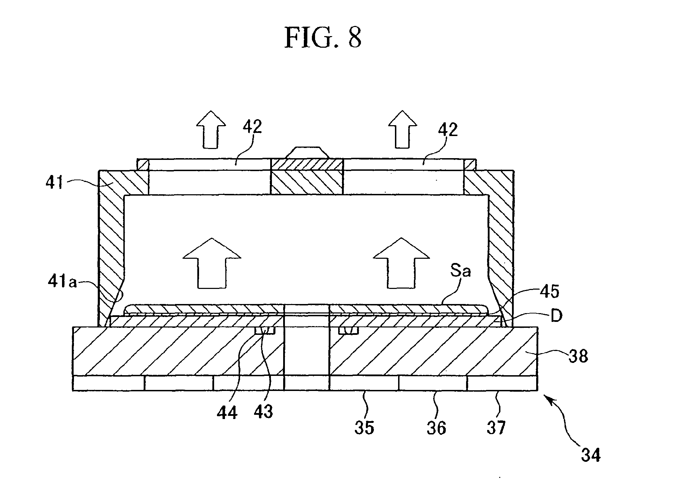

In FIG. 8, a covered cylindrical disk press 41 (a pressure member) is installed on top of the tray 38, enclosing the disk D mounted on the surface heater 34. The bottom inside edge of the cylindrical portion of the disk press 41 is formed as a tapered portion 41a around the entire circumference of the disk press 41, and this tapered portion 41a contacts the outer peripheral corner of the disk D. As a result, when the coating film Sa is heated with the surface heater 34 through the disk D, any deformation of the disk D such as distortion or warping caused by the heat treatment can be prevented, as the disk D is pressed against the tray 38. A ventilation port 42 is provided within the lid portion of the disk press 41 to allow the vapor generated during the heating of the coating film Sa to escape. In this ventilation port 42, the aperture area can be adjusted using a shutter member not shown in the figure, and adjusting this shutter member enables the vapor density inside the disk press 41 to be controlled, thus enabling the coating film Sa to be maintained under an atmosphere of constant humidity, thus suppressing condensation and preventing drying irregularities.

Furthermore, an annular rib 43 is typically provided protruding from the rear surface of the disk D on the opposite side to the coating film Sa, at a position near the inside surface of the disk, and the tray 38 on which the disk D is closely mounted comprises an annular-shaped recessed groove 44 for accommodating this rib 43. In order to ensure that the thermal conduction within this recessed groove 44 does not differ from the other regions, which could potentially cause irregularities in the dried coating film, the space between the rib 43 and the recessed groove 44 is filled with a filler (putty) such as a polymer or silicone or the like, thus compensating for any thermal conductivity differences. The receiving layer 5 is formed by drying the coating film Sa, and because the coating liquid becomes semitransparent on drying, a white backing layer 45 is preferably provided underneath the receiving layer 5.

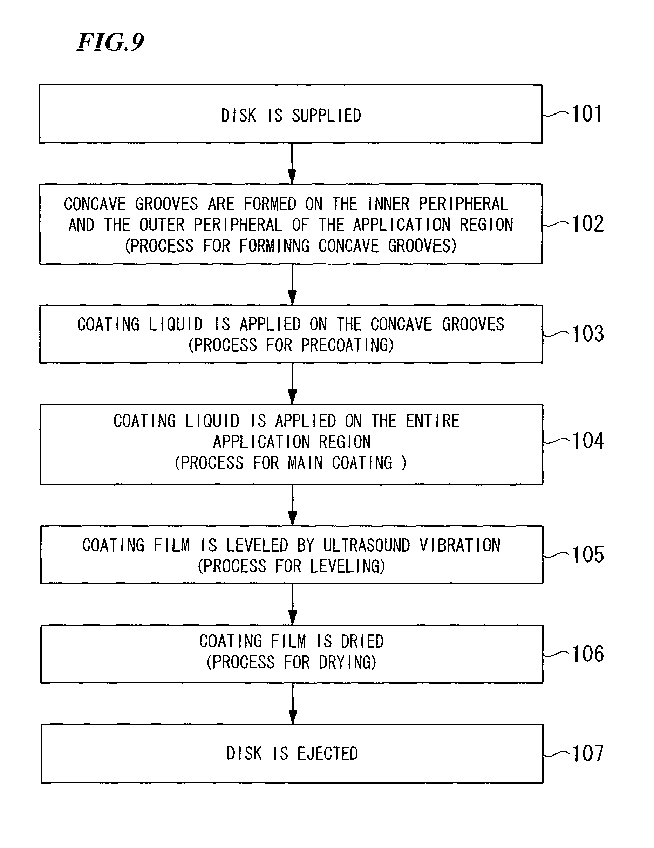

A receiving layer formation apparatus 10 according to the present example has the structure described above. Next is a description of a process for forming a receiving layer using this receiving layer formation apparatus 10, with reference to the flowchart shown in FIG. 9.

First, within the coating film forming section 11 of the receiving layer formation apparatus 10 shown in FIG. 1, a single disk D formed from a laminated structure comprising a disk substrate 2, an information recording layer 3, and another disk substrate 4 is supplied from the supply portion 16, with the spacer removed, and is mounted on the turntable 15 of the handover portion A1, using a handover device not shown in the drawings (step 101). On each turntable 15, the disk D is held in place in a substantially concentric position by a suction device not shown in the drawings, which suctions the disk from beneath the turntable. Then, as the turntable 14 undergoes its intermittent rotation, disks D are supplied sequentially from the supply portion 16 to the turntable 15 of the handover portion A1.

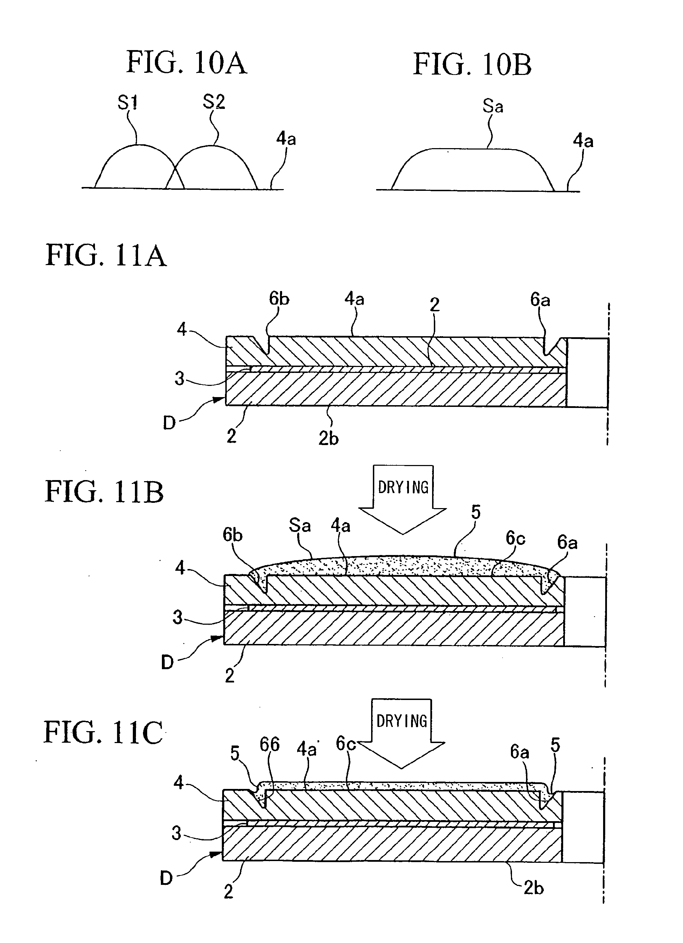

By rotating the turntable 14 through a predetermined angle (60° in this example), the disk D is transported from the handover portion A1 to the partition forming portion A2, and the disk D is positioned beneath the cutting device 20, as shown in FIG. 2. The cutting blades 20a are then lowered in positions corresponding with the inner peripheral edge and the outer peripheral edge of the region in which the annular-shaped receiving layer 5 is to be formed on the print surface 4a, and cuts are inserted in the disk substrate 4. The turntable 15 is rotated at the same time, and is rotated a single revolution on the central axis O of the disk D. In this manner, the disk substrate 4 is cut and forced outwards in both directions by the cutting blades 20a, thus forming the ring-shaped concave grooves 6a and 6b (step 102). The thus obtained concave grooves 6a and 6b have a substantially V-shaped cross section (see FIG. 11A).

Subsequently, the disk D is transported to the preliminary application portion A3, and concave groove application nozzles 22 are positioned facing the concave grooves 6a and 6b as shown in FIG. 3. Then, as a preliminary application step, the water-based coating liquid S is supplied from the concave groove application nozzles 22, while the turntable 15 is rotated about its axis, thus filling each of the concave grooves 6a and 6b with the water-based coating liquid S to the point where they protrude above the print surface 4a (step 103). This filling operation with the water-based coating liquid S forces out any air inside the concave grooves 6a and 6b, thus preventing the retention of residual air within the concave grooves 6a and 6b. As a result, the problem that can arise in the subsequent heating and drying step, where residual air trapped within the concave grooves 6a and 6b expands and bursts upwards, leading to the formation of air bubble marks on the surface of the coating film, can be effectively prevented. The quantity of the water-based coating liquid S per unit of surface area supplied from the concave groove application nozzles 22 is preferably at least equal to the application volume per unit of surface area supplied by the supply device 25. This means that the coating film thickness within the concave grooves 6a and 6b can be set to at least equal to that of the coating film thickness within the central region 6c.

The disk D is then transported to the main application portion A4, and is positioned with the print surface 4a facing the supply device 25, as shown in FIG. 4. The supply device 25 has the nozzles 27a to 27h arrayed along a radial direction between the ring-shaped concave grooves 6a and 6b. The turntable 15 is then rotated in this state, while the water-based coating liquid is supplied from each of the nozzles 27a through 27h (step 104). This is called as the main application step. The water-based coating liquid S supplied from each of the nozzles 27a through 27h is applied continuously as liquid droplet-like or as a mountain range-like stream, so that a portion of the water-based coating liquid S overlaps in both the relative movement direction (the circumferential direction) and the array direction (the radial direction) (see FIG. 10). The turntable 15 is rotated at a low speed so that the water-based coating liquid S applied to the print surface 4a is subjected to no spreading effect caused by centrifugal force, and the disk D also rotates at the same slow speed.

In this case, approximately 80% of the water-based coating liquid S is water content, meaning the water-based coating liquid S supplied onto the print surface 4a simultaneously from the nozzles 27a through 27h has a high level of flowability, and because the water-based coating liquid S also displays favorable mutual affinity, a leveling action is initiated, causing a flattening of the coating liquid portions supplied from adjacent nozzles. In other words, as shown in FIG. 10A and FIG. 10B, each of the water-based coating liquid portions (S1, S2) supplied from the nozzles 27a through 27h is supported at the supply position on the print surface 4a, and with only the required quantity remaining at the supply position, the remainder undergoes leveling with the adjacent coating liquid rows, thus forming a continuous coating film Sa. As a result, a uniform coating film is formed without the type of centrifugal force leveling used in spin coating, where the thickness of the coating film Sa varies from the inner peripheral portions to the outer peripheral portions of the disk as a result of the centrifugal force.

The water-based coating liquid S applied during the main application step forms an integrated body with the water-based coating liquid S supplied into the concave grooves 6a and 6b in the preliminary application step, and surface tension causes the formation of a gently curved convex surface within the vicinity of the concave grooves 6a and 6b. In this manner, an annular-shaped coating film Sa is formed in the region between the concave grooves 6a and 6b (see FIG. 11B).

Following completion of the application, the disk D is transported to the leveling portion A5. As shown in FIG. 6, the disk D, in which the coating film Sa having the applied water-based coating liquid S has been formed on the disk substrate 4, is mounted on the support member 30 of the vibration device 29, together with the turntable 15. By activating the ultrasound oscillator 31 of the vibration device 29, the vibration provided by the generated ultrasound waves is transmitted through the support member 30 and the turntable 15, into the coating film Sa on the disk D. For example, by employing a 5 second ultrasound vibration at a frequency of 25 to 45 kHz and an output of approximately 80 Watts, and repeating this vibration 2 to 3 times with an approximately 15 second rest period between repetitions, the water-based coating liquid S can be forcibly leveled in a short period of time (step 105).

By employing this type of ultrasound leveling action, the entire coating film Sa between the concave grooves 6a and 6b can be better flattened, and a more uniform film thickness can be obtained. Especially in the main application step, it is impossible to avoid some overlap of the coating liquid between the application start point and the application end point, leading to a region of greater irregularity than another region in the coating film surface, but this region of greater irregularity can be forcibly flattened in a short period of time using ultrasound vibration.

The disk D is then transported to the ejection portion A6, and at this point, the disk D is fed from the turntable 15, via the transfer portion 17, into the drying section 12, where it is mounted on a tray 38 on one surface heater 34 of the ring-shaped transport member 18. By intermittently rotating the transport member 18, the disks D that arrive in sequence from the coating film forming section 11 are each mounted on a surface heater 34, and are dried while completing a single revolution.

As shown in FIG. 7, the disk D on the surface heater 34 is heated simultaneously by the first, second, and third heaters 35, 36, and 37, which are set at different predetermined temperatures by the heater controllers 39a, 39b, and 39c respectively, with the heat being transmitted through the circular plate shaped tray 38. At this time, the temperature differences between the heaters 35, 36, and 37 are converted to a gentle temperature gradient within the tray 38, by heat exchange at each boundary portion between the heaters, so that a temperature gradient that varies approximately 10 to 20°C between the inner periphery and the outer periphery of the disk D is transmitted through the disk substrate 2 and the disk substrate 4, thus heating the coating film Sa from underneath. This enables the entire coating film Sa to be heated gradually from the bottom surface upwards, while the temperature gradient ensures that drying proceeds gradually from the inner periphery of the narrow diameter and out to the outer periphery of the larger diameter.

As a result, even though the film thickness contracts by approximately 1/5th during the drying treatment for the coating film Sa, wrinkling or cracking of the coating film caused by drying shrinkage can be prevented. Moreover, because the coating film Sa dries from the bottom surface upwards, a skin does not form on the surface of the coating first, which also helps prevent wrinkling and cracking.

Furthermore, during drying, because the depth of the coating liquid within the concave grooves 6a and 6b at the inside edge of each groove, where the groove is cut vertically downwards, is set to a depth that is at least as large as the film thickness of the coating film Sa formed within the central region 6c, the coating film within the concave grooves 6a and 6b does not dry before the coating film of the central region 6c. Accordingly, any flow of the water-based coating liquid S towards the central region caused by drying shrinkage within the concave grooves 6a and 6b at the inner and outer peripheral edges can be effectively prevented.

As a result, drying of the coating film Sa forms a receiving layer 5 with a flat and uniform film thickness over the entire region between the concave grooves 6a and 6b (see FIG. 11C).

The disk D mounted on the surface heater 34 of the transport member 18 is completely dried by the time the transport member 18 completes single revolution, and the dried disk D is then lifted by a handover device not shown in the drawings, and stacked on a stacking portion 19 with spacers provided between the disks.

Accordingly, in an optical disk 1 according to this example, if ink is applied to the receiving layer 5 using an inkjet printer or the like, then a clear printed image can be produced over the entire application region. Particularly in the case of a porous ink receiving layer 5, the ink is accommodated within the pores of the receiving layer 5, which is formed with a substantially uniform film thickness over the entire surface, meaning bleeding from individual pores is prevented, enabling a clear printed image to be obtained.

As described above, according to this example of the present invention, the nozzles 27a through 27h that are arrayed in the radial direction undergo a single revolution relative to the disk D, meaning the coating film Sa can be formed without waste, by supplying only the required quantity of the water-based coating liquid S, and the water-based coating liquid S can be applied and leveled before the water-based coating liquid begins drying, meaning no ridge-like irregularities are left in the coating film Sa along the trajectory lines of the individual nozzles.

Moreover, the vibration device 29 enables any irregularities left in the coating film Sa following completion of the application operation to be completely and reliably flattened. As a result, the water-based coating liquid S can be applied to the disk D and subsequently dried to form a flat receiving layer 5 with a uniform film thickness.

Furthermore, by forming the concave grooves 6a and 6b at the inner peripheral and outer peripheral portions of the receiving layer 5, the problem wherein the inner peripheral edge and the outer peripheral edge of the coating film Sa dry first and contract, causing the water-based coating liquid S to flow towards the central region 6c, can be prevented, enabling a receiving layer 5 with a uniform film thickness over the entire surface to be formed. Moreover, by supplying the water-based coating liquid S into the concave grooves 6a and 6b first, any entrapment of residual air within the concave grooves can be prevented, meaning air bubble marks do not appear on the surface of the coating film Sa.

In addition, during the drying, because the entire coating film is heated from the bottom surface of the coating film Sa, and because a temperature gradient is also applied, wrinkling and cracking of the receiving layer 5 following drying is prevented, and a uniform film thickness is achieved. Accordingly, when the receiving layer 5 is subsequently printed using an inkjet printer or the like, an image that is comparable to a photographic image can be obtained on the receiving layer 5, at the very least in the central region 6c between the concave grooves 6a and 6b, and a clear image can be obtained over the entire layer. In this manner, a process and an apparatus for the mass production of disks D with ink receiving layers 5 can be provided.

### MODIFIED EXAMPLES

As follows is a description of modified examples of the process and apparatus 10 for forming a receiving layer according to the example described above. Those members or components that are either identical or similar to components within the example described above are described using the same reference symbols.

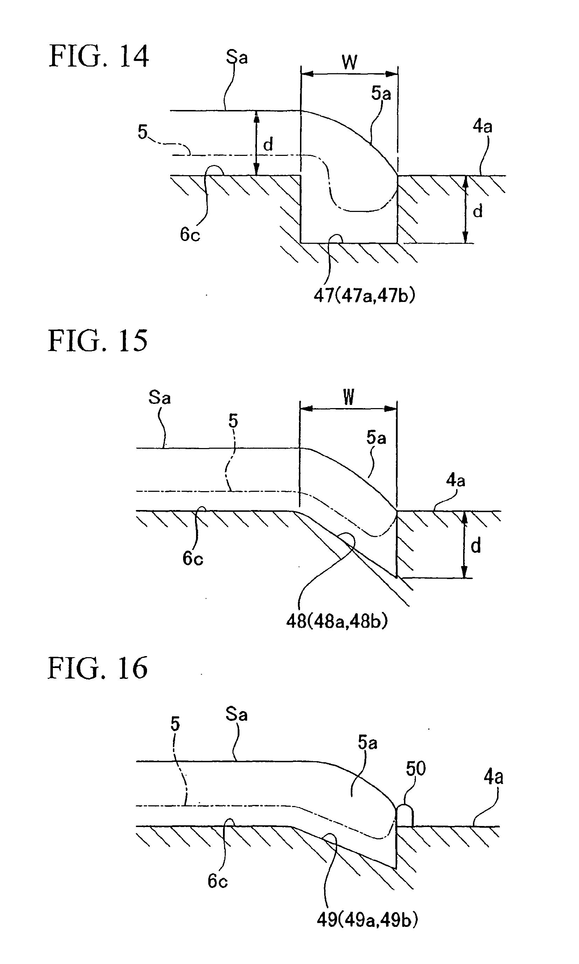

Modified examples of the concave grooves 6a and 6b are described with reference to FIG. 14 through FIG. 16.

FIG. 14 is a partial longitudinal cross-sectional view showing a concave groove 47 (47a and 47b) according to a first modified example. In the figure, the concave groove 47 is formed with a substantially square-shaped cross section, and this type of concave groove is formed around the entire inner peripheral boundary portion 5a and the entire outer peripheral boundary portion 5b of the annular-shaped receiving layer 5. The concave groove 47 is formed with a depth d across the entire width W, meaning that provided the depth d is set to a value that is at least equal to the film thickness of the coating film Sa within the central region 6c, the thickness of the coating film Sa within the concave groove 47 can be set to a value exceeding the film thickness of the central region 6c across the entire width of the concave groove.

FIG. 15 is a partial longitudinal cross-sectional view showing a concave groove 48 (48a and 48b) according to a second modified example. In the figure, this type of concave groove 48, which is formed around the entire inner peripheral boundary portion 5a and the entire outer peripheral boundary portion 5b of the receiving layer 5, is formed with a substantially right angled triangular-shaped cross section, in an opposite orientation to the concave grooves 6a and 6b in the above example, so that at the outside edge of the receiving layer 5, the concave groove drops down vertically to a maximum depth d, and a straight or convex curve-shaped sloped surface is then formed that rises up towards the central region 6c.

In this case, the coating film Sa is formed with a substantially uniform film thickness over the concave grooves 48a and 48b and the central region 6c. As a result, in the case of this modified example, the film thickness of the receiving layer 5 can be formed with a uniform film thickness over the entire receiving layer 5, including the concave grooves 48a and 48b.

FIG. 16 is a partial longitudinal sectional view showing a concave groove 49 (49a and 49b) according to a third modified example. This type of concave groove 49 is formed around the entire inner peripheral boundary portion 5a and the entire outer peripheral boundary portion 5b of the receiving layer 5, and in a similar manner to a concave groove 48 of the second modified example, is formed with a substantially right angled triangular-shaped cross section. A convex portion 50 is formed around the entire periphery at the outside of the concave groove 49. The height of this convex portion 50 may be set to a value equal to the film thickness of the receiving layer 5 following drying. In such a case, the maximum depth d of the concave groove 49 can be shallower than that of the concave groove 48 by an amount equivalent to the height of the convex portion 50. This enables the angle of the slope within the concave groove 49 of the receiving layer 5 to be reduced.

In these modified examples, because the thickness of the coating liquid that fills each of the concave grooves is at least equal to the film thickness within the central region, fluctuations in the film thickness caused by flow of the coating liquid during drying can be suppressed, meaning the receiving layer 5 within the central region 6c enclosed by the concave grooves is flat and has a constant film thickness right out to the boundary portions.

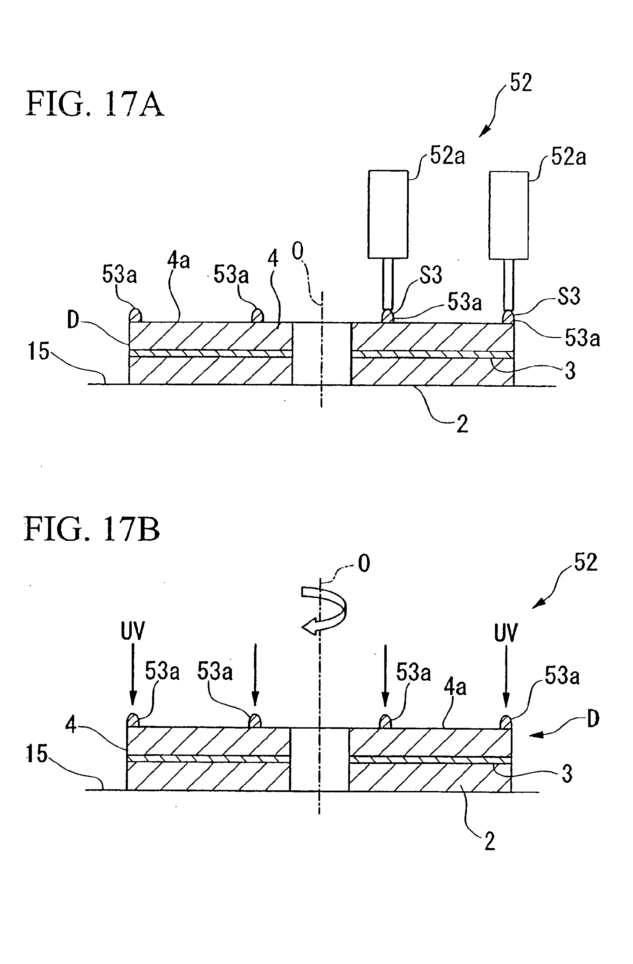

The partitions for partitioning the coating liquid application region and forming the receiving layer 5 may also be formed as convex portions instead of the concave grooves 6a and 6b described above. As follows is a description of a process for forming such convex portions, with reference to FIG. 17.

In the receiving layer formation apparatus 10, the cutting device 20 at the partition forming portion A2 is replaced with a secondary supply devices 52 shown in FIG. 17, which functions as the partition forming device. The secondary supply device 52 has a pair of supply nozzles 52a, which are positioned above the inner peripheral portion 5a and the outer peripheral portion 5b of the annular-shaped application region. Each of the supply nozzles 52a is formed from a single microdispenser nozzle or the like, and the coating liquid S3 supplied from these nozzles has, for example, an ultraviolet curable composition with a higher viscosity than that of the coating liquid S. Convex portions 53a formed by each of the supply nozzles 52a are preferably formed with a height that is either equal to, or slightly lower than, the film thickness of the coating film Sa formed from the water-based coating liquid S. Because the inner and outer peripheral edges of the coating film Sa will contact the convex portions 53a with surface tension, a coating film Sa of uniform film thickness can be formed over the entire region, enabling a receiving layer 5 of uniform thickness to be formed following the drying.

In the receiving layer formation step, when a disk D mounted concentrically on the turntable 15 is transported to the partition forming portion A2, the pair of supply nozzles 52a of the secondary supply device 52 are advanced and positioned facing the inner peripheral portion 5a and the outer peripheral portion 5b of the receiving layer 5 that is to be formed. In this state, the turntable 15 is rotated on the central axis O, rotating the disk D relative to the supply nozzles 52a. At the same time, the coating liquid S3 is supplied from the supply nozzles 52a, thus forming continuous convex sections 53a with a substantially mountain range-like cross section on the print surface 4a, and forming ring shapes at both the inner peripheral portion 5a and the outer peripheral portion 5b of the receiving layer 5 (see FIG. 17A). Because the convex portions 53a are formed from a high viscosity coating liquid S3, collapsing of the convex portions caused by the liquid flowing outward does not occur, but rather the convex shape is maintained with good molding characteristics.

Each of the convex portions 53a is then cured by irradiation with ultraviolet light (see FIG. 17B). This completes the formation of ring-shaped inner peripheral and outer peripheral convex portions 53a.

Subsequently, when the disk is transported to the main application portion A4, the supply device 25 is advanced and positioned facing the region between the convex portions 53a, as shown in FIG. 4, and the water-based coating liquid S used for forming the coating film Sa is applied to the region between the convex portions 53a.

The concave grooves or convex portions that function as partitions need not be formed in the receiving layer formation step as described in the examples above. The partitions may also be formed in a step prior to the receiving layer formation step, for example during the manufacture of the disk D, with the partitions either formed in an integrated manner during molding of the disk, or formed in a separate molding step.

Furthermore, in the examples described above, the shape of the supply ports (the nozzle cross sections) of each of the nozzles 27a through 27h of the supply device 25 was circular, but the shape of the supply ports is not restricted to a circular shape, and any arbitrary shape such as a square or an oval shape can also be employed.

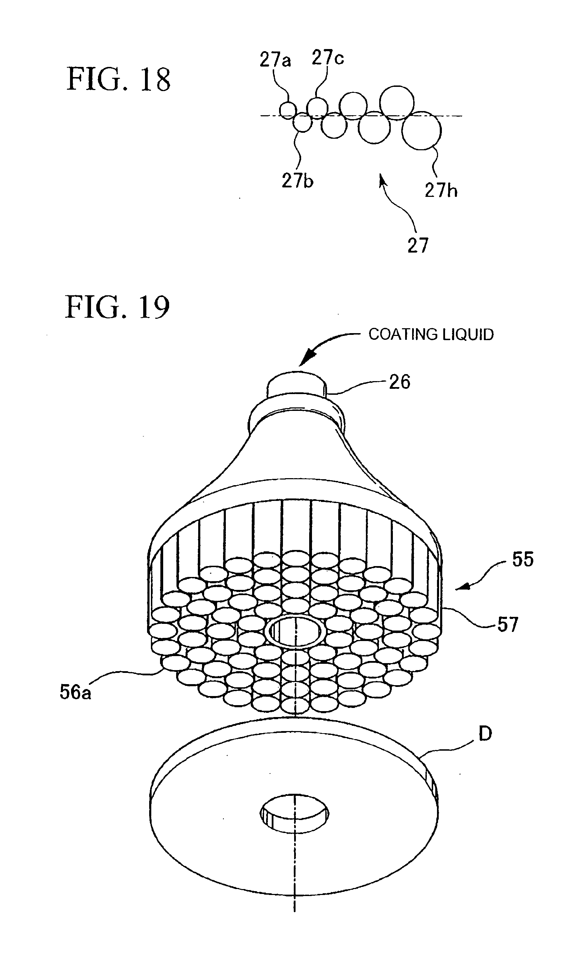

In addition, in the examples described above, a supply device 25 was used in which the plurality of nozzles 27a to 27h were arrayed in a straight line across the radial direction of the disk, but a configuration in which the plurality of nozzles 27a to 27h are arranged in a zigzag shape across the radial direction with adjacent nozzles contacting each other, as shown in FIG. 18, is also possible. By using this type of array, the water-based coating liquid S supplied from each of the radially arrayed nozzles 27a to 27h, which forms portions of coating liquid with substantially hemicycle -like cross sections on the surface of the disk substrate 4, can be applied with a better partial overlap between adjacent portions of the water-based coating liquid S, in both the radial direction and the circumferential direction.

Furthermore, in the examples described above, the surface area of each of the supply ports of the plurality of nozzles 27a to 27h (the cross-sectional areas of the nozzles) gradually increase outwards along the radial direction, but instead of using this configuration, the surface area of the supply port of each of the nozzles 27a through 27h could also be set to the same value, and the supply quantity of the water-based coating liquid S supplied from each of the nozzles 27a to 27h set so as to gradually increase outwards along the radial direction, thereby ensuring that the coating quantity per unit of surface area is constant over the print surface 4a of the disk D. In such a case, the supply volume may be controlled by altering the supply pressure for the water-based coating liquid S at each of the nozzles 27a through 27h.

Furthermore, in the receiving layer formation apparatus 10 described in the above examples, a configuration was described in which the disk D is rotated at a low, constant speed by the turntable 15, while the supply device 25 is held in a stationary state above the print surface 4a, but the opposite configuration, in which the disk D is held in a stationary state and the supply device 25 is rotated at a constant speed on the central axis O while the water-based coating liquid S is supplied, is also possible. In all cases, the disk D and the supply device 25 are moved relatively.

Next is a description of a modified example of the supply device 25, with reference to FIG. 19.

In FIG. 19, the disk D is mounted in a stationary state on the turntable 15, which is not shown in the figure. A supply device 55 for supplying the water-based coating liquid S has a supply portion 26 that functions as the sole coating liquid supply source, and a nozzle portion 57 having a plurality of nozzles 56a that branch out from the supply portion 26. This plurality of nozzles 56a is arranged so as to face the entire receiving layer application region on the print surface 4a of the disk D. The nozzle portion 57 is also held in a stationary state, while the water-based coating liquid S is supplied from each of the individual nozzles 56a.

In this example, because the region in which the receiving layer 5 is to be formed is an annular-shaped region, the plurality of nozzles 56a of the nozzle portion 57 are also arrayed in a ring shape that extends across the radial direction and around the circumferential direction, thus forming a substantially honeycomb-like structure. Moreover, the supply ports of each of the nozzles 56a are formed with the same surface area.

Accordingly, when using this type of supply device 55 to apply the water-based coating liquid S to a disk D, an equal quantity of the coating liquid is supplied from each of the nozzles 56a of the nozzle portion 57, and the quantity is set so that each of the droplets of the water-based coating liquid S partially overlaps with the adjacent droplets on the print surface 4a.

This example of the present invention offers the advantage that because the application of the water-based coating liquid S is conducted with both the disk D and the nozzle portion 57 in a stationary state, the application operation can be conducted very reliably and within a shorter period of time, meaning the leveling treatment can be completed more reliably prior to any natural drying.

Furthermore, the present invention is not restricted to compact disks such as the optical disk 1, and can also be applied to a variety of other application targets, including other types of disks. Furthermore, the present invention is not restricted to the use of water-based coating liquids S as the coating liquid, and any coating agent in liquid form can be used.

### INDUSTRIAL APPLICABILITY

The present invention can be applied to a process and an apparatus for forming a receiving layer that enables the printing of clear images or textual information, using an inkjet printer or the like, onto any of a variety of disks such as compact disks, and can also be applied to disks with this type of receiving layer formed thereon.

## Claims

1. A process for forming an inkjet receiving layer by applying a coating liquid to an application region on a disk to form a coating film, and subsequently drying said coating film, comprising the steps of:
forming partitions for partitioning said coating liquid at boundaries between said application region and a non-application region on said disk;
supplying a substantially constant quantity of said coating liquid per unit of surface area to each supply position within said application region that has been partitioned off by said partitions using a plurality of arrayed nozzles;
leveling coating liquid portions supplied to adjacent supply positions, thus forming a coating film; and
drying said coating film to form a receiving layer over an entirety of said application region.

2. A process for forming an inkjet receiving layer according to claim 1, wherein said partitions are concave grooves, and said coating liquid is applied to a region enclosed by said concave grooves.

3. A process for forming an inkjet receiving layer according to claim 2, wherein said concave grooves are formed with a maximum depth that is equal to, or greater than, a film thickness of said coating film within said region enclosed by said concave grooves.

4. A process for forming an inkjet receiving layer according to claim 1, wherein said partitions are convex portions produced by applying an ultraviolet curable composition to said disk, and then curing said composition by irradiation with ultraviolet light.

5. A process for forming an inkjet receiving layer according to claim 1, wherein said plurality of nozzles are arrayed across a radial direction of said disk, an aperture area of each nozzle increases with proximity to an outer periphery along said radial direction, and said nozzles and said disk are subjected to relative rotation at a speed that ensures no flowing of said coating liquid due to centrifugal force, while said coating liquid is applied to said application region.

6. A process for forming an inkjet receiving layer according to claim 1, wherein said plurality of nozzles is arrayed facing an entirety of said application region, and application is conducted without relative rotation of said plurality of nozzles and said disk.

7. A process for forming an inkjet receiving layer according to claim 1, wherein said coating liquid is a water-based coating liquid with a solid content of approximately 20%.

8. A process for forming an inkjet receiving layer according to claim 1, wherein said coating liquid is a water-based coating liquid for forming a porous receiving layer, comprising a pigment and a binder.

9. A process for forming an inkjet receiving layer according to claim 8, wherein said pigment is one material selected from the group consisting of alumina, silica, silica-alumina composite particles, boehmite, and gas phase synthetic silica.

10. A process for forming an inkjet receiving layer according to claim 7, wherein said coating liquid is a water-based coating liquid for forming a swelling type ink receiving layer, comprising a hydrophilic polymer.

11. A process for forming an inkjet receiving layer according to claim 7, wherein said coating liquid is a water-based coating liquid for forming a swelling type ink receiving layer, comprising a water-soluble polymer.

12. A process for forming an inkjet receiving layer according to claim 1, further comprising:
a leveling step in which following supply of said coating liquid over an entirety of said application region, and subsequent formation of said coating film, said coating film is flattened by vibration.

13. A process for forming an inkjet receiving layer according to claim 1, wherein drying of said coating film is conducted using heating means provided underneath said disk, and said heating means form a gentle temperature gradient in which temperature falls from an inside edge towards an outside edge of said coating film.

14. An apparatus for forming an inkjet receiving layer within an application region on a disk, comprising:
partition forming means, which form partitions for partitioning off a coating liquid at boundaries between an application region and a non-application region; and
supply means, which comprise a plurality of arrayed nozzles to supply a substantially constant quantity of coating liquid per unit of surface area to said application region that has been partitioned off by said partitions, wherein
coating liquid portions supplied to said application region from adjacent nozzles of said supply means are flattened by leveling, thus forming a receiving layer over an entirety of said application region.

15. An apparatus for forming an inkjet receiving layer according to claim 14, wherein said partition forming means are concave groove forming means, which form concave grooves at said boundaries on said disk.

16. An apparatus for forming an inkjet receiving layer according to claim 14, wherein said partition forming means are convex portion forming means, which form convex portions at said boundaries of said application region on said disk.

17. An apparatus for forming an inkjet receiving layer according to claim 14, wherein said plurality of nozzles of said supply means is arrayed across a radial direction of said disk, an aperture area of each nozzle increases with proximity to an outer periphery along said radial direction, and said supply means applies said coating liquid to said application region, while said nozzles and said disk are subjected to relative rotation at a speed that ensures no flowing of said coating liquid due to centrifugal force.

18. An apparatus for forming an inkjet receiving layer according to claim 14, wherein said plurality of nozzles of said supply means is arrayed facing an entirety of said application region, and said supply means applies said coating liquid without relative rotation of said plurality of nozzles and said disk.

19. An apparatus for forming an inkjet receiving layer according to claim 14, further comprising:
leveling means which subject a coating film formed by supplying said coating liquid over an entirety of said application region to vibration, thus flattening said coating film.

20. An apparatus for forming an inkjet receiving layer according to claim 14, further comprising:
heating means provided underneath said disk, wherein said heating means dries a coating film by forming a gentle temperature gradient in which temperature falls from an inside edge towards an outside edge of said coating film.

21. A disk comprising an inkjet receiving layer formed within an application region, wherein partitions are formed at boundary portions between said application region and a non-application region, and said receiving layer is formed within a region partitioned off by said partitions.

22. A disk according to claim 21, wherein said partitions are concave grooves, and said receiving layer is formed within a region enclosed by said concave grooves.
